# EUROPÄISCHE PATENTSCHRIFT

(11) **EP 3 180 231 B1**
(45) Veröffentlichungstag und Bekanntmachung des Hinweises auf die Patenterteilung: **30.01.2019**
(21) Anmeldenummer: 15734160.3
(22) Anmeldetag: 06.07.2015
(51) Int. Cl.: B62D 7/20, B62D 7/16

(54) **SPUR- ODER LENKSTANGE FÜR EIN FAHRZEUG**
TRACK ROD OR STEERING ROD FOR A VEHICLE
BARRE D'ACCOUPLEMENT OU DE DIRECTION POUR VÉHICULE

(30) Priorität: 11.08.2014 DE 102014215878
(43) Veröffentlichungstag der Anmeldung: 21.06.2017
(73) Patentinhaber: ZF Friedrichshafen AG, 88046 Friedrichshafen (DE)
(72) Erfinder: REDDEHASE, Günter, 49448 Brockum (DE); STRENGE, Christian, 22589 Hamburg (DE)
(86) Internationale Anmeldenummer: PCT/EP2015/065279
(87) Internationale Veröffentlichungsnummer: WO 2016/023679

(56) Entgegenhaltungen:
- DE-U1- 7 732 250
- US-A- 3 938 822
- US-A- 4 092 078
- US-A- 4 890 949

## Beschreibung

Die Erfindung betrifft eine Spur- oder Lenkstange für ein Fahrzeug, mit einer Stange, die einen sich in einer Längsrichtung erstreckenden mit einem Außengewinde versehenen Endabschnitt aufweist, einer mit einem Außengewinde und mit einem Innengewinde versehenen Hülse, die auf den Endabschnitt aufgeschraubt ist, einem Gelenkgehäuse, welches eine mit einem Innengewinde versehene und auf die Hülse aufgeschraubte Schraubfassung aufweist, an der zwei durch einen die Wandung der Schraubfassung durchsetzenden und in Längsrichtung verlaufenden Schlitz voneinander getrennte Flansche mit jeweils einem quer zur Längsrichtung verlaufenden Durchgangsloch vorgesehen sind, und einem Klemmmittel, welches einen sich durch die Durchgangslöcher der Flansche hindurch erstreckenden Bolzen aufweist.

Die DE 77 32 250 U1 offenbart eine aus zwei Teilen bestehende, verstellbare Spurstange für Lenkgestänge von Kraftfahrzeugen mit einem einerseits ein Linksgewinde und andererseits ein Rechtsgewinde aufweisenden Verbindungsglied, in das die beiden jeweils mit dem entsprechenden Gewinde versehenen Spurstangenteile eingeschraubt sind, wobei das Verbindungsglied aus einer mit Innen- und Außengewinde versehenen Hülse besteht, in deren Innengewinde ein mit Gewinde versehener Schaftteil des einen Spurstangenteils eingeschraubt und auf deren Außengewinde ein als Schraubfassung ausgebildeter Endteil des anderen Spurstangenteils aufgeschraubt ist.

Im Falle ungenügender Klemmpressung zwischen dem Innengewinde der Schraubfassung und dem Außengewinde der Hülse kann es bei der vorgenannten Spurstange zu einem Abziehen der Schraubfassung von der Hülse kommen.

Ausgehend hiervon liegt der Erfindung die Aufgabe zugrunde, bei einer Spur- oder Lenkstange der eingangs genannten Art ein solches Abziehen der Schraubfassung von der Hülse verhindern zu können.

Diese Aufgabe wird durch eine Spur- oder Lenkstange nach Anspruch 1 gelöst. Bevorzugte Weiterbildungen der Spur- oder Lenkstange sind in den Unteransprüchen und in der nachfolgenden Beschreibung gegeben.

Die Spur- oder Lenkstange für ein Fahrzeug weist eine Stange, die einen sich in einer Längsrichtung erstreckenden mit einem Außengewinde versehenen Endabschnitt umfasst, eine mit einem Außengewinde und mit einem Innengewinde versehene Hülse, die auf den Endabschnitt aufgeschraubt ist, ein Gelenkgehäuse, welches eine mit einem Innengewinde versehene und auf die Hülse aufgeschraubte Schraubfassung umfasst, an der zwei durch einen die Wandung der Schraubfassung durchsetzenden und in Längsrichtung verlaufenden Schlitz voneinander getrennte Flansche mit jeweils einem quer zur Längsrichtung verlaufenden Durchgangsloch vorgesehen sind, und ein Klemmmittel auf, welches einen sich durch die Durchgangslöcher der Flansche hindurch erstreckenden Bolzen umfasst, wobei die Hülse an ihrem Außenumfang eine Nut aufweist, in welche der Bolzen eingreift.

Dadurch, dass die Hülse an ihrem Außenumfang eine Nut aufweist, in welche der Bolzen eingreift, ist die Hülse formschlüssig an der Schraubfassung gesichert. Einem Abziehen der Schraubfassung von der Hülse im Falle ungenügender Klemmpressung kann somit sicher entgegengewirkt werden.

Der Bolzen erstreckt sich bevorzugt quer zur Längsrichtung. Die Hülse und/oder die Schraubfassung erstrecken sich bevorzugt in Längsrichtung. Insbesondere ist dem Endabschnitt der Stange und/oder der Hülse und/oder der Schraubfassung eine sich in Längsrichtung erstreckende Mittenlängsachse zugeordnet. Vorteilhaft sind der Endabschnitt der Stange und/oder die Hülse und/oder die Schraubfassung konzentrisch angeordnet, insbesondere bezüglich der Mittenlängsachse. Die Hülse ist bevorzugt eine zylindrische Hülse. Insbesondere bildet die Mittenlängsachse die Zylinderachse der Hülse. Eine senkrecht zur Mittenlängsachse verlaufende Richtung wird bevorzugt als radiale Richtung bezeichnet.

Werden die beiden Flansche durch das Klemmmittel quer zur Längsrichtung auf einander zu gedrückt, so reduziert sich die Schlitzweite, was mit einer Reduzierung des Durchmessers der Schraubfassung einhergeht. Dadurch wird die Schraubfassung radial gegen die Hülse gedrückt. Bevorzugt wird dadurch auch die Hülse radial gegen den Endabschnitt der Stange gedrückt, sodass die Hülse radial zwischen der Schraubfassung und dem Endabschnitt der Stange eingeklemmt wird.

Gemäß einer Weiterbildung sind die Flansche durch das Klemmmittel, insbesondere quer zur Längsrichtung, aufeinander zu gedrückt. Bevorzugt ist die Schraubfassung durch das Klemmmittel radial gegen die Hülse gedrückt. Vorzugsweise ist die Hülse durch das Klemmmittel und/oder durch die Schraubfassung radial gegen den Endabschnitt der Stange gedrückt. Vorteilhaft ist die Hülse, insbesondere durch das Klemmmittel, radial zwischen dem Endabschnitt der Stange und der Schraubfassung eingeklemmt.

Bevorzugt ist die Hülse mit wenigstens einem Längsschlitz versehen, der insbesondere als Tauchschlitz ausgebildet und/oder in Längsrichtung beidseitig geschlossen ist. Hierdurch kann der Durchmesser der Hülse durch das Klemmmittel und/oder durch die Schraubfassung einfacher reduziert werden, damit die Hülse radial gegen den Endabschnitt der Stange drücken kann. Bevorzugt ist die Hülse mit mehreren Längsschlitzen versehen, die insbesondere gleichmäßig über den Umfang der Hülse verteilt angeordnet sind. Vorteilhaft ist die Hülse mit zwei oder mit drei Längsschlitzen versehen. Die Längsschlitze sind insbesondere als Tauchschlitze und/oder in Längsrichtung beidseitig geschlossen ausgebildet. Bevorzugt besteht die Hülse aus Metall, insbesondere aus Stahl.

Gemäß einer Ausgestaltung weist der Bolzen einen Bolzenkopf auf, der an einem der Flansche abgestützt ist. Vorzugsweise umfasst das Klemmmittel eine an dem anderen der Flansche abgestützte Mutter mit einem Innengewinde, die auf ein mit einem Außengewinde versehenen Bereich des Bolzens aufgeschraubt ist. Die Flansche sind bevorzugt zwischen dem Bolzenkopf und der Mutter angeordnet, insbesondere eingespannt. Der Bolzen ist z.B. als Schraubbolzen und/oder als Sechskantschraube und/oder als Klemmbolzen ausgebildet. Die Mutter kann z.B. auch als Sicherungsmutter bezeichnet werden.

Gemäß einer Ausgestaltung ist die am Außenumfang der Hülse vorgesehene Nut in Längsrichtung beidseitig begrenzt, insbesondere durch Nutwände. Beispielsweise verläuft die Nut quer zur Längsrichtung. Bevorzugt ist die am Außenumfang der Hülse vorgesehene Nut eine umlaufende Nut. Somit muss die Hülse gegenüber der Schraubfassung nicht orientiert eingebaut werden, um den Bolzen in die Nut einbringen zu können. Vorteilhaft läuft die am Außenumfang der Hülse vorgesehene Nut um die Mittenlängsachse um.

Bevorzugt wird die am Außenumfang der Hülse vorgesehene Nut bereits vor dem Aufschrauben der Schraubfassung auf die Hülse ausgebildet. Alternativ wäre es möglich, die Durchgangslöcher durch die Flansche im eingebauten Zustand der Hülse zu bohren und dabei die am Außenumfang der Hülse vorgesehene Nut mit auszubilden. Allerdings besteht dann keine nachträgliche Einstellmöglichkeit mehr.

Gemäß einer Weiterbildung sind die Abmessungen der Nut in Längsrichtung größer als die Abmessungen des Bolzens in Längsrichtung. Hierdurch wird ein Einstellbereich geschaffen. Insbesondere ist es möglich, die Hülse relativ zu dem Endabschnitt der Stange und der Schraubfassung zu drehen und dadurch den Abstand zwischen der Schraubfassung und dem Endabschnitt der Stange zu verändern. Die Grenzen des Einstellbereichs sind dabei durch die Abmessungen der Nut in Längsrichtung und die Abmessungen des Bolzens in Längsrichtung vorgegeben. Somit ist ein zulässiger Einstellbereich vorgebbar. Dies hat den besonderen Vorteil, dass unzulässige Einstellungen ausgeschlossen werden können, da der Bolzen vor dem Erreichen einer unzulässigen Einstellung gegen eine der Nutwände anschlagen würde. Bei dieser Weiterbildung ist die am Außenumfang der Hülse vorgesehene Nut insbesondere eine umlaufende Nut. Dies ist für das Ändern des Abstands zwischen der Schraubfassung und dem Endabschnitt der Stange durch Drehen der Hülse sinnvoll. Die Spur- oder Lenkstange umfasst somit ein aus der Schraubfassung, der Hülse und dem Endabschnitt der Stange gebildetes Einstellsystem, welches auch als Feineinstellsystem bezeichnet werden kann.

Gemäß einer Ausgestaltung weisen die beiden Gewinde der Hülse eine unterschiedliche Drehrichtung auf. Bevorzugt weist das Außengewinde des Endbereichs der Stange dieselbe Drehrichtung wie das Innengewinde der Hülse auf. Ferner weist das Innengewinde der Schraubfassung bevorzugt dieselbe Drehrichtung wie das Außengewinde der Hülse auf. Die Drehrichtung eines Gewindes wird in der Regel durch die Begriffe "Rechtsgewinde" und "Linksgewinde" angegeben. Bevorzugt ist somit eines der beiden Gewinde der Hülse ein Rechtsgewinde und das andere der beiden Gewinde der Hülse ein Linksgewinde. Beispielsweise ist das Innengewinde der Hülse ein Rechtsgewinde und das Außengewinde der Hülse ein Linksgewinde. In diesem Fall ist das Außengewinde des Endbereichs der Stange insbesondere ein Rechtsgewinde, und das Innengewinde der Schraubfassung ist insbesondere ein Linksgewinde. Alternativ ist das Außengewinde der Hülse ein Rechtsgewinde und das Innengewinde der Hülse ein Linksgewinde. In diesem Fall ist das Außengewinde des Endbereichs der Stange insbesondere ein Linksgewinde, und das Innengewinde der Schraubfassung ist insbesondere ein Rechtsgewinde.
Bevorzugt umfasst die Hülse eine Schlüsselfläche, die insbesondere an ihrem Außenumfang und/oder außerhalb der Schraubfassung vorgesehen ist. Somit ist es möglich, ein Werkzeug. wie z.B. einen Schraubenschlüssel, zum Drehen der Hülse an der Schlüsselfläche anzusetzen. Die Schlüsselfläche ist vorzugsweise durch eine prismatische Außenkontur der Hülse gebildet, wie z.B. durch einen Außensechskant. Alternativ können aber auch andere unrunde Außenkonturen als Schlüsselfläche vorgesehen sein.
Im Falle ungenügender Klemmpressung zwischen dem Innengewinde der Hülse und dem Außengewinde des Endabschnitts der Stange kann es zu einem Abziehen der Hülse von der Stange kommen. Erfindungsgemäß ist zwischen dem dem Gelenkgehäuse zugewandten Ende der Hülse und dem dem Gelenkgehäuse zugewandten Ende der Stange am Außenumfang der Stange ein radial vorspringendes Sicherungselement vorgesehen. Würde die Hülse von der Stange abgezogen, so würde das Sicherungselement an der Stirnseite der Hülse anschlagen und somit ein weiteren Abziehen formschlüssig verhindern. Durch das Sicherungselement kann somit einem Abziehen der Hülse von der Stange im Falle ungenügender Klemmpressung sicher entgegengewirkt werden.

Bevorzugt weist die Stange an ihrem Außenumfang eine umlaufende Nut auf, in der ein Sicherungsring eingesetzt ist, der insbesondere das Sicherungselement bildet. Diese umlaufende Nut ist dabei insbesondere zwischen dem dem Gelenkgehäuse zugewandten Ende der Hülse und dem dem Gelenkgehäuse zugewandten Ende der Stange am Außenumfang der Stange vorgesehen. Der Sicherungsring bietet den Vorteil, dass er nach dem Aufschrauben der Hülse in die Nut eingesetzt werden kann. Insbesondere ist der Sicherungsring in die umlaufende Nut eingeschnappt. Vorteilhaft läuft die am Außenumfang der Stange vorgesehene Nut um die Mittenlängsachse um.

Die Stange besteht bevorzugt aus Metall, insbesondere aus Stahl. Beispielsweise besteht die Stange aus Vollmaterial. Vorzugsweise ist die Stange aber als Rohr ausgebildet. Beispielsweise ist die Stange insgesamt oder zumindest in ihrem Endabschnitt als Rohr ausgebildet. Somit kann gegenüber einer Stange aus Vollmaterial Gewicht eingespart werden. Das Rohr ist vorzugsweise ungeschlitzt, insbesondere in seinem Endabschnitt.

Gemäß einer Ausgestaltung ist der Endabschnitt der Stange gegenüber der restlichen Stange verjüngt. Hierdurch ist es möglich, sich bei der Stange, abgesehen von ihrem Endabschnitt, an herkömmlichen Dimensionierungen zu orientieren, was die Austauschbarkeit mit herkömmlichen Spur- oder Lenkstangen erhöht. Beispielsweise ist bei herkömmlichen Spur- oder Lenkstangen häufig ein am Gelenkgehäuse vorgesehener Schaft in eine Fassung der Stange eingesetzt, sodass diese Stangen einen relativ großen Durchmesser aufweisen können.

An ihrem dem Gelenkgehäuse abgewandten Ende ist die Stange bevorzugt mit einem anderen Gelenk verbunden, welches vorzugsweise ein Axialgelenk, insbesondere ein Axialkugelgelenk ist. Die Stange kann auch als Verbindungsstange bezeichnet werden.

In dem Gelenkgehäuse ist bevorzugt ein Gelenkinnenteil bewegbar gelagert, insbesondere unter Zwischenschaltung einer Lagerschale. Das Gelenkgehäuse und das Gelenkinnenteil bilden somit ein Gelenk, vorzugsweise ein Winkelgelenk, insbesondere ein Kugelgelenk. Vorteilhaft umfasst das Gelenk auch die Lagerschale. Bei dem Gelenkinnenteil handelt es sich bevorzugt um einen Kugelzapfen. Das Gelenkgehäuse umfasst vorzugsweise einen mit der Schraubfassung fest verbundenen Gehäusekopf, in dem das Gelenkinnenteil gelagert ist, insbesondere unter Zwischenschaltung der Lagerschale.

Das Gelenkgehäuse besteht bevorzugt aus Gusswerkstoff, insbesondere aus höherfestem Gusswerkstoff mit erhöhter Dehnung. Alternativ kann das Gelenkgehäuse auch ein Schmiedeteil sein. Vorteilhaft besteht das Gelenkgehäuse aus Metall. Insbesondere bildet das Gelenkgehäuse ein einteiliges und/oder einstückiges Bauteil, bevorzugt zusammen mit der Schraubfassung und mit den Flanschen. Beispielsweise ist das Gelenkgehäuse zusammen mit der Schraubfassung und mit den Flanschen materialhomogen ausgebildet.

Die Spur- oder Lenkstange ist bevorzugt zum Einsatz in Nutzkraftfahrzeugen oder Bussen vorgesehen. Insbesondere ist keine Klemmschelle erforderlich. Durch hohe Festigkeitswerte des Werkstoffes vom Gelenkgehäuse kann ein "Eingraben" (Überschreitung der zulässigen Flächenpressung) der Sicherungsmutter und des Bolzenkopfes verhindert werden. Durch große Gewindedurchmesser von Rohrende, Hülse und Innengewinde des Gelenkgehäuses kann der gesamte Klemmverband robuster gestaltet werden als bei einem herkömmlichen Gelenkgehäuse mit Gewindeschelle. Bei unsachgemäßer Verschraubung der Sicherungsmutter mit dem Bolzen wird unter dynamischer Beanspruchung ein Herunterdrehen der Hülse durch den Sicherungsring auf dem Rohrende verhindert. Ein Abziehen des Gelenkgehäuses von der Hülse wird zusätzlich durch eine Nut in der Hülse, in welche der Bolzen eingreift, verhindert. Das Rohteil des Gehäuses wird vorzugsweise aus höherfesten Gusswerkstoff mit erhöhter Dehnung gefertigt. Der Gehäusekopf kann über einen größeren Querschnitt als bei einem Schaftgehäuse an den Gehäusetopf (Schraubfassung) angebunden werden. Bei einem Gussteil bietet sich auch die Möglichkeit, den Innenbereich des Gehäusetopfes hohl vorzugießen.

Die Erfindung wird nachfolgend anhand einer bevorzugten Ausführungsform unter Bezugnahme auf die Zeichnung beschrieben. In der Zeichnung zeigen:
- Fig. 1: eine Seitenansicht einer Spurstange gemäß einer Ausführungsform,
- Fig. 2: einen Längsschnitt durch den in Fig. 1 mit A gekennzeichneten Bereich der Spurstange,
- Fig. 3: eine perspektivische und teiltransparente Ansicht des in Fig. 1 mit A gekennzeichneten Bereichs der Spurstange und
- Fig. 4: eine perspektivische Ansicht des aus den Fig. 1 bis 3 ersichtlichen Winkelgelenkgehäuses.

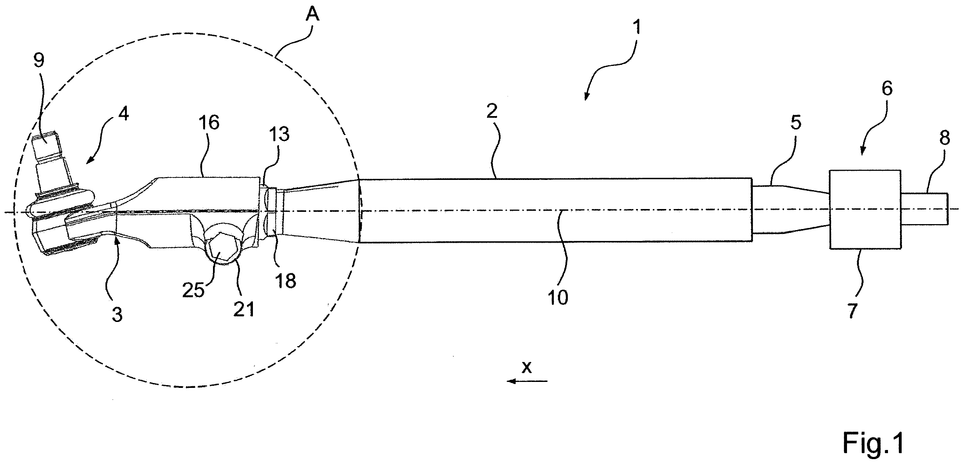

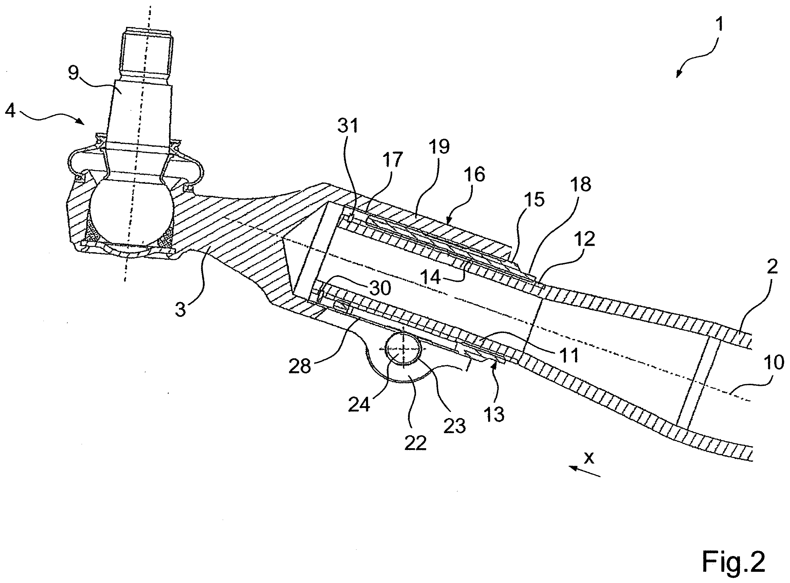

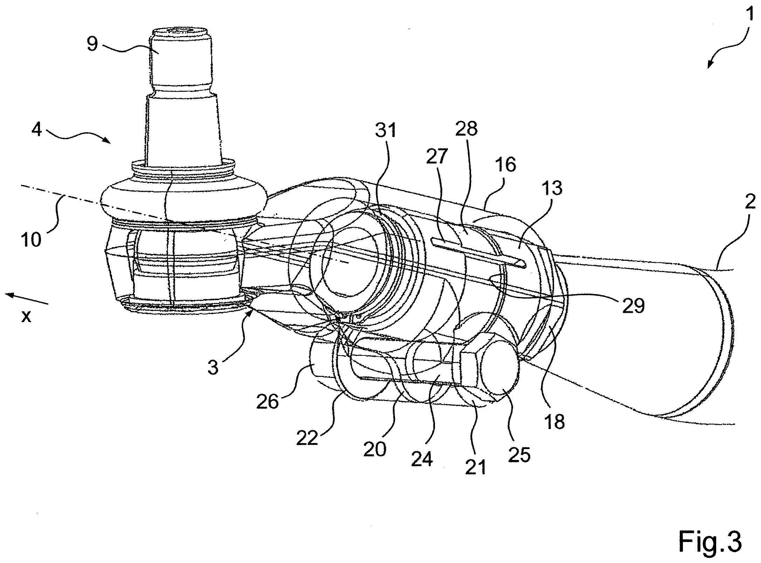

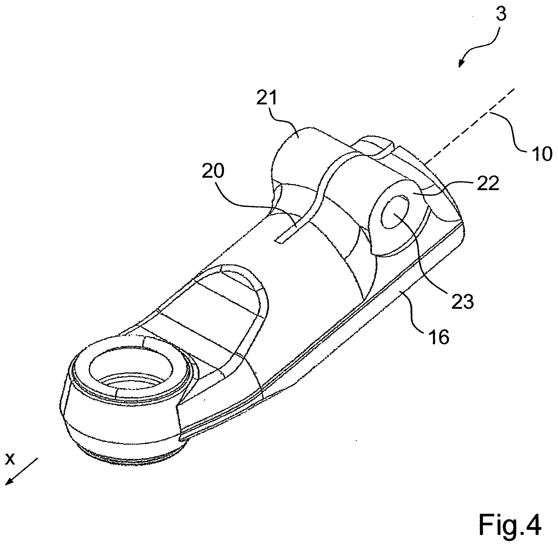

Aus den Fig. 1 bis 3 sind unterschiedliche Ansichten und Teilansichten einer Spurstange 1 gemäß einer Ausführungsform ersichtlich, wobei die Spurstange 1 eine Verbindungsstange 2 aufweist, die an ihrem einen Ende mit dem Gelenkgehäuse 3 eines als Kugelgelenk ausgebildeten Winkelgelenks 4 und an ihrem anderen Ende mit dem Kugelzapfen 5 eines Axialkugelgelenks 6 verbunden ist, dessen Gelenkgehäuse 7 an seinem der Verbindungsstange 2 abgewandten Ende einen Anschlusszapfen 8 mit einem Außengewinde trägt. Das Winkelgelenk 4 umfasst einen Kugelzapfen 9, der an den Achsschenkel eines Fahrzeugrads anschließbar ist. Die Mittenlängsachse der Verbindungsstange 2 ist mit dem Bezugszeichen 10 gekennzeichnet und verläuft in einer Längsrichtung x der Spurstange 1. Ferner ist eine perspektivische Ansicht des Gelenkgehäuses 3 in Einzeldarstellung aus Fig. 4 ersichtlich.

Nachfolgend wird der in Fig. 1 mit A gekennzeichnete Bereich betrachtet, der einen radseitigen Endbereich der Spurstange 1 bildet. Die Verbindungsstange 2 ist als Rohr ausgebildet und weist einen dem Winkelgelenk 4 zugewandten, zylindrischen Endabschnitt 11 mit einem Außengewinde 12 auf. Auf den Endabschnitt 11 ist eine zylindrische Hülse 13 aufgeschraubt, die dazu ein Innengewinde 14 aufweist. Die Hülse 13 weist ferner ein Außengewinde 15 auf und ist in eine Schraubfassung 16 des Winkelgelenkgehäuses 3 eingeschraubt, die dazu ein Innengewinde 17 aufweist. Die Gewinde 14 und 15 der Hülse 13 weisen eine unterschiedliche Drehrichtung auf, sodass eines dieser Gewinde ein Rechtsgewinde und das andere dieser Gewinde ein Linksgewinde ist. Ferner weist das Außengewinde 12 der Verbindungsstange 2 dieselbe Drehrichtung wie das Innengewinde 14 der Hülse 13 auf. Auch weist das Innengewinde 17 der Schraubfassung 16 dieselbe Drehrichtung wie das Außengewinde 15 der Hülse 13 auf. Durch Drehen der Hülse 13 relativ zu der Verbindungsstange 2 und dem Winkelgelenkgehäuse 3 lässt sich somit der Abstand zwischen den beiden Gelenken 4 und 6 variieren. Zur Erleichterung dieses Drehens ist außerhalb der Schraubfassung 16 an der Außenumfangsfläche der Hülse 13 eine Schlüsselfläche 18 in Form eines Außensechskants vorgesehen, an den ein Schraubenschlüssel zum Drehen der Hülse 13 angesetzt werden kann.

An der Schraubfassung 16 sind zwei durch einen die Wandung 19 der Schraubfassung 16 durchsetzenden und in Längsrichtung x verlaufenden Schlitz 20 voneinander getrennte Flansche 21 und 22 mit jeweils einem quer zur Längsrichtung x verlaufenden Durchgangsloch 23 (siehe Fig. 4) vorgesehen. Der Schlitz 20 ist dabei an seinem dem Winkelgelenk 4 abgewandten Ende in Längsrichtung offen. Durch die Durchgangslöcher 23 erstreckt sich ein Bolzen 24 hindurch, der einen an den Flansch 21 anliegenden Bolzenkopf 25 aufweist. Ferner weist der Bolzen 24 auf seinem dem Bolzenkopf 25 abgewandten Ende ein Außengewinde auf, auf welches eine Mutter 26 aufgeschraubt ist, die an dem Flansch 22 anliegt. Die beiden Flansche 21 und 22 sind durch den Bolzenkopf 25 und die Mutter 26 derart gegeneinander gespannt und/oder aufeinander zu gedrückt, dass die Schraubfassung 16 zusammengedrückt ist und radial gegen die Hülse 13 drückt. Durch die zusammengedrückte Schraubfassung 16 ist auch die mit einem oder mehreren Längsschlitzen 27 versehene Hülse 13 zusammengedrückt und drückt nun ihrerseits radial gegen den Endbereich 11 der Verbindungsstange 2. Dadurch ist die Hülse 13 zwischen der Schraubfassung 16 und dem Endbereich 11 der Verbindungsstange 2 festgeklemmt. Der Bolzen 24 und die Mutter 26 bilden somit zusammen ein Klemmmittel. Der oder jeder der Längsschlitze 27 durchsetzt die Wandung der Hülse 13 und ist in Längsrichtung x beidseitig geschlossen. Bevorzugt sind drei Längsschlitze 27 in der Hülse 13 vorgesehen, die gleichmäßig verteilt rings der Mittenlängsachse 10 angeordnet sind.

Am Außenumfang der Hülse 13 ist eine um die Mittenlängsachse 10 umlaufende Nut 28 vorgesehen, in welche der Bolzen 24 eingreift. Da die Nut 28 in Längsrichtung x beidseitig durch ihre Nutwände 29 begrenzt ist, kann die Hülse 13 bei gelockertem Klemmmittel nur solange relativ zu der Schraubfassung 16 gedreht werden, bis der Bolzen 24 an eine der Nutwände 29 anstößt. Ferner ist die Hülse 13 durch den in die Nut 28 eingreifenden Bolzen 24 formschlüssig an der Schraubfassung 16 gesichert, sodass diese nicht von der Hülse 13 abgezogen werden kann.

Zwischen dem dem Winkelgelenk 4 zugewandten Ende der Hülse 13 und dem dem Winkelgelenk 4 zugewandten Ende der Verbindungsstange 2 ist am Außenumfang des Endabschnitts 11 der Verbindungsstange 2 eine umlaufende Nut 30 vorgesehen, in welche ein radial von der Verbindungsstange 2 vorstehender Sicherungsring 31 eingesetzt ist. Die Hülse 13 ist durch den Sicherungsring 31 formschlüssig an der Verbindungsstange 2 gesichert, sodass sie nicht von der Verbindungsstange 2 abgezogen werden kann.

### Bezugszeichen

- 1: Spurstange
- 2: Verbindungsstange / Rohr
- 3: Gehäuse des Winkelgelenks
- 4: Winkelgelenk
- 5: Kugelzapfen des Axialkugelgelenks
- 6: Axialkugelgelenk
- 7: Gehäuse des Axialkugelgelenks
- 8: Anschlusszapfen des Axialkugelgelenks
- 9: Kugelzapfen des Winkelgelenks
- 10: Mittenlängsachse der Verbindungsstange
- 11: Endbereich / Endabschnitt der Verbindungsstange
- 12: Außengewinde des Endabschnitts
- 13: Hülse
- 14: Innengewinde der Hülse
- 15: Außengewinde der Hülse
- 16: Schraubfassung des Winkelgelenkgehäuses
- 17: Innengewinde der Schraubfassung
- 18: Schlüsselfläche der Hülse
- 19: Wandung der Schraubfassung
- 20: Schlitz in Schraubfassung
- 21: Flansch an Schraubfassung
- 22: Flansch an Schraubfassung
- 23: Durchgangsloch in Flansch
- 24: Bolzen
- 25: Bolzenkopf
- 26: Mutter
- 27: Längsschlitz in Hülse
- 28: umlaufende Nut in Hülse
- 29: Nutwand
- 30: umlaufende Nut in Verbindungsstange
- 31: Sicherungsring
- x: Längsrichtung der Spurstange

## Patentansprüche

1. Spur- oder Lenkstange für ein Fahrzeug, mit einer Stange (2), die einen sich in einer Längsrichtung (x) erstreckenden mit einem Außengewinde (12) versehenen Endabschnitt (11) aufweist, einer mit einem Außengewinde (15) und mit einem Innengewinde (14) versehenen Hülse (13), die auf den Endabschnitt (11) aufgeschraubt ist, einem Gelenkgehäuse (3), welches eine mit einem Innengewinde (17) versehene und auf die Hülse (13) aufgeschraubte Schraubfassung (16) aufweist, an der zwei durch einen die Wandung (19) der Schraubfassung (16) durchsetzenden und in Längsrichtung (x) verlaufenden Schlitz (20) voneinander getrennte Flansche (21, 22) mit jeweils einem quer zur Längsrichtung (x) verlaufenden Durchgangsloch (23) vorgesehen sind, und einem Klemmmittel, welches einen sich durch die Durchgangslöcher (23) der Flansche (21, 22) hindurch erstreckenden Bolzen (24) aufweist, **dadurch gekennzeichnet, dass** die Hülse (13) an ihrem Außenumfang eine Nut (28) aufweist, in welche der Bolzen (24) eingreift und dass zwischen dem dem Gelenkgehäuse (3) zugewandten Ende der Hülse (13) und dem dem Gelenkgehäuse (3) zugewandten Ende der Stange (2) am Außenumfang der Stange (2) ein radial vorspringendes Sicherungselement vorgesehen ist.

2. Spur- oder Lenkstange nach Anspruch 1, **dadurch gekennzeichnet, dass** die am Außenumfang der Hülse (13) vorgesehene Nut (28) in Längsrichtung (x) beidseitig begrenzt ist.

3. Spur- oder Lenkstange nach Anspruch 1 oder 2, **dadurch gekennzeichnet, dass** die am Außenumfang der Hülse (13) vorgesehene Nut (28) eine umlaufende Nut ist.

4. Spur- oder Lenkstange nach einem der vorangehenden Ansprüche, **dadurch gekennzeichnet, dass** in Längsrichtung (x) die Abmessungen der Nut (28) größer als die Abmessungen des Bolzens (24) sind.

5. Spur- oder Lenkstange nach einem der vorhergehenden Ansprüche, **dadurch gekennzeichnet, dass** die Stange (2) an ihrem Außenumfang eine umlaufende Nut (30) aufweist, in der ein das Sicherungselement bildender Sicherungsring (31) eingesetzt ist.

6. Spur- oder Lenkstange nach einem der vorangehenden Ansprüche, **dadurch gekennzeichnet, dass** die Stange (2) als Rohr ausgebildet ist.

7. Spur- oder Lenkstange nach einem der vorangehenden Ansprüche, **dadurch gekennzeichnet, dass** der Endabschnitt (11) der Stange (2) gegenüber der restlichen Stange verjüngt ist.

8. Spur- oder Lenkstange nach einem der vorangehenden Ansprüche, **dadurch gekennzeichnet, dass** eines der beiden Gewinde (14, 15) der Hülse (13) ein Rechtsgewinde und das andere der beiden Gewinde der Hülse (13) ein Linksgewinde ist.

9. Spur- oder Lenkstange nach einem der vorangehenden Ansprüche, **dadurch gekennzeichnet, dass** die Hülse (13) mit wenigstens einem Längsschlitz (27) versehen ist.

## Claims

1. Track or steering rod for a vehicle, having a rod (2) which has an end section (11) which extends in a longitudinal direction (x) and is provided with an external thread (12), having a sleeve (13) which is provided with an external thread (15) and with an internal thread (14) and is screwed onto the end section (11), having a joint housing (3) which has a screw socket (16) which is provided with an internal thread (17), is screwed onto the sleeve (13), and on which two flanges (21, 22) with in each case one through hole (23) which runs transversely with respect to the longitudinal direction (x) are provided, which flanges (21, 22) are separated from one another by way of a slot (20) which penetrates the wall (19) of the screw socket (16) and runs in the longitudinal direction (x), and having a clamping means which has a pin (24) which extends through the through holes (23) of the flanges (21, 22), **characterized in that**, on its outer circumference, the sleeve (13) has a groove (28), into which the pin (24) engages, and **in that** a radially projecting securing element is provided on the outer circumference of the rod (2) between that end of the sleeve (13) which faces the joint housing (3) and that end of the rod (2) which faces the joint housing (3).

2. Track or steering rod according to Claim 1, **characterized in that** the groove (28) which is provided on the outer circumference of the sleeve (13) is delimited on both sides in the longitudinal direction (x) .

3. Track or steering rod according to Claim 1 or 2, **characterized in that** the groove (28) which is provided on the outer circumference of the sleeve (13) is a circumferential groove.

4. Track or steering rod according to one of the preceding claims, **characterized in that**, in the longitudinal direction (x), the dimensions of the groove (28) are greater than the dimensions of the pin (24) .

5. Track or steering rod according to one of the preceding claims, **characterized in that**, on its outer circumference, the rod (2) has a circumferential groove (30), into which a securing ring (31) which forms the securing element is inserted.

6. Track or steering rod according to one of the preceding claims, **characterized in that** the rod (2) is configured as a tube.

7. Track or steering rod according to one of the preceding claims, **characterized in that** the end section (11) of the rod (2) is tapered with respect to the remaining rod.

8. Track or steering rod according to one of the preceding claims, **characterized in that** one of the two threads (14, 15) of the sleeve (13) is a right-handed thread, and the other one of the two threads of the sleeve (13) is a left-handed thread.

9. Track or steering rod according to one of the preceding claims, **characterized in that** the sleeve (13) is provided with at least one longitudinal slot (27).

## Revendications

1. Barre d'accouplement ou de direction, comprenant une barre (2) qui comporte une partie d'extrémité (11) munie d'un filetage externe (12) et s'étendant dans une direction longitudinale (x), un manchon (13) qui est pourvu d'un filetage externe (15) et d'un filetage interne (14) et qui est vissé sur la partie d'extrémité (11), un boîtier articulé (3) qui comporte une douille à vis (16) qui est munie d'un filetage interne (17) et est vissée sur le manchon (13) et au niveau de laquelle il est prévu deux brides (21, 22) qui sont séparées l'une de l'autre par une fente (20) ménagée dans la paroi (19) de la douille à vis (16) et s'étendant dans la direction longitudinale (x) et qui sont pourvues chacune d'un trou traversant (23) s'étendant transversalement à la direction longitudinale (x), et un moyen de serrage qui comporte un boulon (24) s'étendant à travers les trous traversants (23) des brides (21, 22), **caractérisée en ce que** le manchon (13) comporte sur la périphérie extérieure une gorge (28) dans laquelle s'engage le boulon (24) et **en ce qu'**un élément de fixation saillant radialement est prévu sur la périphérie extérieure de la barre (2) entre l'extrémité du manchon (13) dirigée vers le boîtier articulé (3) et l'extrémité de la barre (2) dirigée vers le boîtier articulé (3).

2. Barre d'accouplement ou de direction selon la revendication 1, **caractérisée en ce que** la gorge (28) ménagée sur la périphérie extérieure du manchon (13) est délimitée des deux côtés dans la direction longitudinale (x).

3. Barre d'accouplement ou de direction selon la revendication 1 ou 2, **caractérisée en ce que** la gorge (28) ménagée sur la périphérie extérieure du manchon (13) est une gorge circonférentielle.

4. Barre d'accouplement ou de direction selon l'une des revendications précédentes, **caractérisée en ce que**, dans la direction longitudinale (x), les dimensions de la gorge (28) sont supérieures aux dimensions du boulon (24) .

5. Barre d'accouplement ou de direction selon l'une des revendications précédentes, **caractérisée en ce que** la barre (2) comporte sur sa périphérie extérieure une gorge circonférentielle (30) dans laquelle est insérée une bague de retenue (31) formant l'élément de fixation.

6. Barre d'accouplement ou de direction selon l'une des revendications précédentes, **caractérisée en ce que** la barre (2) est réalisée sous la forme d'un tube.

7. Barre d'accouplement ou de direction selon l'une des revendications précédentes, **caractérisée en ce que** la partie d'extrémité (11) de la barre (2) est effilée par rapport au reste de la barre.

8. Barre d'accouplement ou de direction selon l'une des revendications précédentes, **caractérisée en ce que** l'un des deux filetages (14, 15) du manchon (13) est un filetage à droite et l'autre des deux filetages du manchon (13) est un filetage à gauche.

9. Barre d'accouplement ou de direction selon l'une des revendications précédentes, **caractérisée en ce que** le manchon (13) est pourvu d'au moins une fente longitudinale (27).
